# FASCICULE DE BREVET EUROPEEN

(11) **EP 2 940 817 B1**
(45) Date de publication et mention de la délivrance du brevet: **09.11.2016**
(21) Numéro de dépôt: 15165697.2
(22) Date de dépôt: 29.04.2015
(51) Int. Cl.: H02G 3/18

(54) **BOÎTIER DE CONNEXION POUR LUMINAIRE D'ÉCLAIRAGE PUBLIC**
ANSCHLUSSDOSE FÜR LEUCHTE FÜR DIE ÖFFENTLICHE BELEUCHTUNG
CONNECTION BOX FOR PUBLIC LIGHTING LUMINAIRE

(30) Priorité: 30.04.2014 FR 1453939
(43) Date de publication de la demande: 04.11.2015
(73) Titulaire: LACROIX SOGEXI, 69380 Les Cheres (FR)
(72) Inventeur: Stempel, Marianne, 69009 Lyon (FR); Chelle, Franck, 69009 Lyon (FR)
(74) Mandataire: Lavoix

(56) Documents cités:
- EP-A1- 0 629 021
- DE-U1-202006 020 166

## Description

La présente invention concerne un boîtier de connexion permettant d'assurer les fonctions suivantes :
- Continuité du réseau de distribution électrique. Ce réseau est généralement triphasé, c'est-à-dire qu'il comprend un neutre et trois phases.
- Connexion du réseau de distribution au réseau d'alimentation du luminaire. Ce dernier est généralement monophasé, c'est-à-dire qu'il comprend un neutre et une seule phase.
- Protection électrique, et possibilité de sectionnement.

Un tel boîtier, parfois dénommé « coffret de candélabre », est prévu pour être installé dans la partie inférieure d'un candélabre, au niveau d'une ouverture aménagée dans le candélabre et permettant l'accès au boîtier par un opérateur. A partir de ce boîtier, des conducteurs cheminent dans le mât, afin d'alimenter la lanterne, aussi appelée luminaire. La lanterne inclut une lampe, telle qu'une lampe à décharge ou des diodes électroluminescentes, aussi appelées DEL ou LED.

Dans un tel boîtier, la continuité du réseau de distribution est généralement assurée par un bornier. Ce bornier, qui peut être du type décrit dans EP-A-0 629 021, permet la connexion entre les quatre conducteurs électriques d'un câble provenant du lampadaire précédent et les quatre conducteurs d'un câble connecté au lampadaire suivant.

La protection électrique contre les surintensités est généralement assurée par un porte-fusible, intégrant une cartouche fusible et monté sur un support de fixation, tel qu'un rail DIN 35.

En général, deux conducteurs assurent la connexion entre le bornier et le porte-fusible. Ils permettent la transition d'un réseau triphasé en un réseau monophasé et assurent la sélection de la phase qui sera utilisée dans la lanterne. Enfin, les deux conducteurs d'alimentation de la lanterne sont connectés sur le porte-fusible.

Les conducteurs sont en général vissés dans les bornes du bornier et du porte-fusible. De plus, sur une installation complète, afin de mieux répartir la charge sur les différentes phases, l'opérateur peut être amené à choisir ou modifier, pour chaque boîtier, la phase utilisée pour l'alimentation de la lanterne. Cela nécessite de déconnecter et reconnecter un conducteur, en vissant et dévissant une vis. Ces différentes opérations de vissage sont relativement contraignantes, et nécessitent l'emploi d'un ou de plusieurs outils spécifiques.

C'est notamment à cet inconvénient qu'entend remédier l'invention en proposant un boîtier incluant un nombre réduit de connexions vissées et offrant la possibilité à l'utilisateur de choisir facilement, sans avoir recours à un outil, la phase qu'il souhaite connecter aux conducteurs d'alimentation du luminaire. Ce boîtier assure notamment la connexion entre le circuit de distribution d'éclairage public, appelé ici circuit primaire, et le circuit d'alimentation du luminaire, appelé ici circuit secondaire.

A cet effet, l'invention a pour objet un boitier de connexion de deux conducteurs électriques secondaires d'alimentation d'un luminaire d'éclairage public à deux des conducteurs d'un réseau de distribution électrique primaire triphasé, ce boîtier incluant un bornier de connexion sur lequel sont connectés les conducteurs électriques primaires . Ce boîtier est caractérisé en ce qu'il comprend un unique sélecteur permettant de connecter ou de déconnecter, en une opération, un conducteur électrique secondaire de phase à un conducteur électrique primaire choisi parmi les trois conducteurs de phase du réseau de distribution électrique primaire triphasé et le conducteur électrique secondaire de neutre au conducteur électrique primaire de neutre de ce réseau.

Ainsi, le sélecteur de l'invention permet à l'utilisateur de choisir la phase à connecter, en plus du neutre, aux conducteurs d'alimentation de la lanterne. De cette manière, la sélection de la phase est facile et ne nécessite pas l'utilisation d'un outil. De plus, elle est rapide, puisqu'elle peut être effectuée en une seule opération. Par ailleurs, le retrait du sélecteur, par rapport à une embase fixe du boîtier, permet d'ouvrir le circuit électrique et de sectionner à la fois le neutre et la phase. Ainsi, le luminaire est complètement isolé électriquement du réseau de distribution électrique primaire triphasé. Lorsque le sélecteur est retiré, l'utilisateur peut, sans utiliser un outil, remplacer facilement un dispositif de protection contre les surintensités, tel qu'un fusible, dont est pourvu le sélecteur.

Selon des aspects avantageux mais non obligatoires de l'invention, un tel boîtier de connexion peut incorporer une ou plusieurs des caractéristiques techniques suivantes, prises en toute combinaison techniquement admissible :
- La déconnexion du sélecteur réalise la fonction de sectionnement électrique du circuit d'alimentation électrique du luminaire.
- Le sélecteur comporte un dispositif de protection contre les surintensités.
- Le sélecteur assure la connexion entre deux conducteurs secondaires d'alimentation du luminaire et deux bornes sélectionnées parmi les quatre bornes du bornier de connexion.
- Les quatre bornes du bornier de connexion correspondent aux trois phases et au neutre du réseau électrique primaire triphasé et les deux conducteurs secondaires correspondent à l'une des phases de ce réseau et au neutre.
- Le dispositif de protection contre les surintensités est un fusible, placé électriquement en série entre la borne de phase sélectionnée et le conducteur secondaire de phase.
- Le sélecteur comprend des pattes de contact permettant de le connecter électriquement à l'une des bornes du bornier de connexion.
- Le sélecteur comprend un circuit imprimé incluant des moyens de connexion électrique avec, d'une part, deux des conducteurs primaires du réseau électrique et, d'autre part, les conducteurs secondaires d'alimentation du luminaire.
- Le circuit imprimé inclut un ou plusieurs témoins lumineux permettant de visualiser la présence de tension de part et d'autre du fusible.
- Le boîtier comprend, sur sa surface supérieure, trois emplacements destinés à recevoir le sélecteur et correspondant chacun à la sélection de l'une des trois phases du réseau de distribution.

L'invention sera mieux comprise et d'autres avantages de celle-ci apparaitront plus clairement à la lumière de la description qui va suivre d'un boîtier de connexion conforme à son principe, donnée uniquement à titre d'exemple et faite en référence aux dessins annexés dans lesquels :
- la figure 1 est une vue schématique en perspective d'un lampadaire comportant un boîtier de connexion conforme à l'invention ;
- la figure 2 est une vue en perspective partiellement éclatée de dessus d'un boîtier de connexion conforme à l'invention ;
- la figure 3 est une vue en perspective de face du boîtier de connexion et de son sélecteur, dans la disposition de la figure 1, sans coque de protection ;

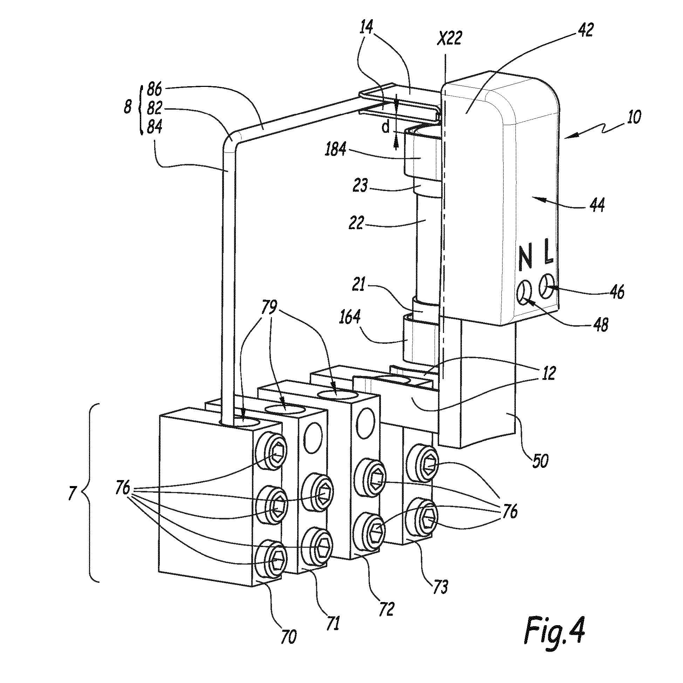

- la figure 4 est une vue analogue à la figure 3, sous un angle différent ;
- la figure 5 est une vue en perspective d'un sélecteur du boîtier des figures 1 à 4 sans capot de protection ;
- la figure 6 est une vue en perspective d'un sélecteur d'un boîtier conforme à un deuxième mode de réalisation de l'invention ;
- la figure 7 est une vue en perspective selon un autre angle du sélecteur de la figure 6 ; et
- la figure 8 est une vue en perspective d'une borne d'un boîtier conforme à un troisième mode de réalisation de l'invention.

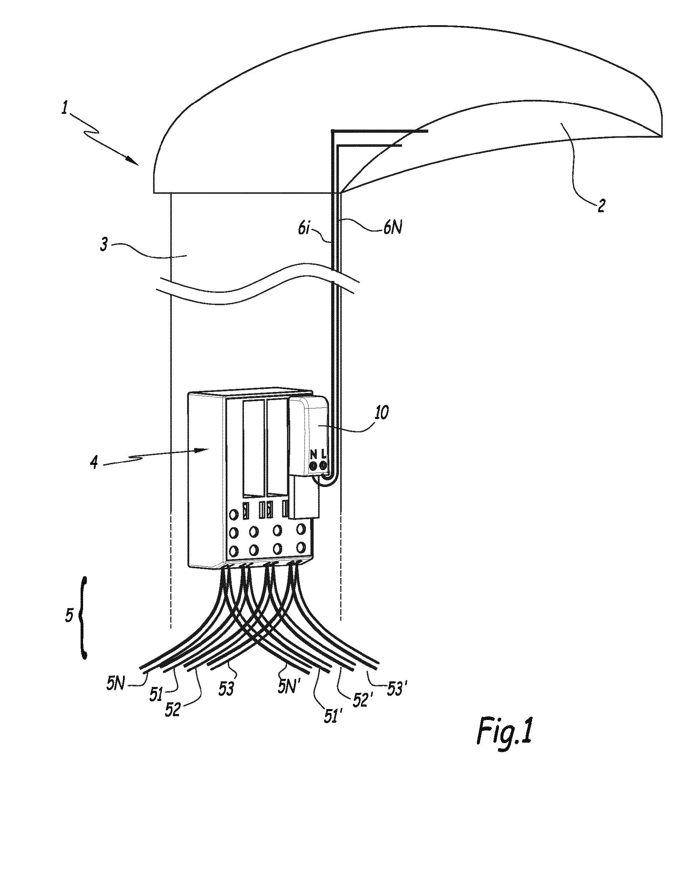

La figure 1 représente un lampadaire 1 comprenant une lanterne 2, également dénommée luminaire, et un mât 3, la lanterne 2 étant située au sommet du mât 3. Le lampadaire 1 comprend également un boîtier de connexion 4 permettant de relier électriquement des conducteurs électriques primaires 5 d'un réseau de distribution électrique à des conducteurs secondaires 6 alimentant la lanterne 2 en électricité, à partir de ce boîtier.

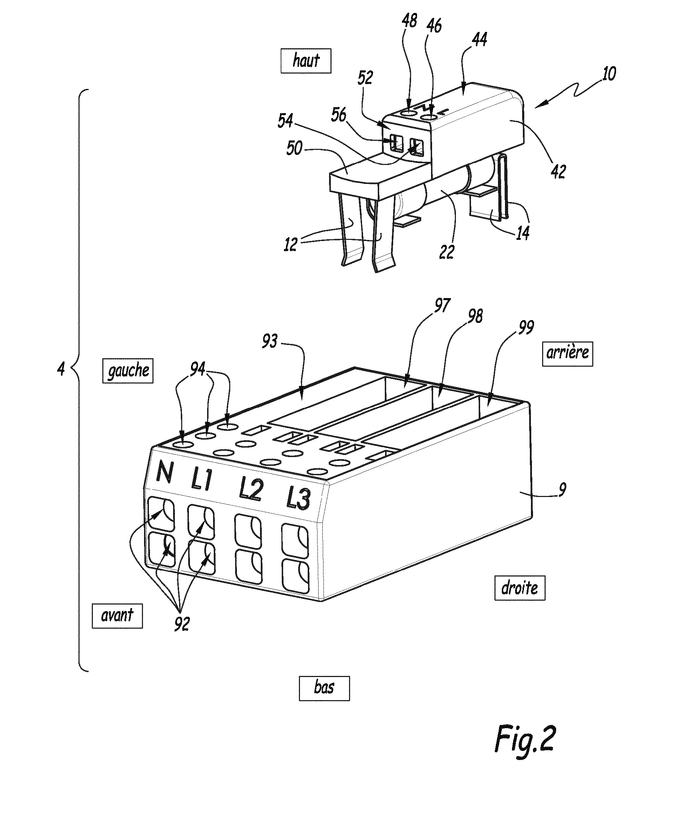

Dans la suite de la présente description, les notions de « supérieur », « inférieur », « avant », « arrière », « droite » et « gauche » sont définis en référence à la figure 2 dans laquelle le boitier de connexion 4 est représenté indépendamment du lampadaire 1.

Le lampadaire 1 est alimenté par un réseau de distribution électrique primaire triphasé. Plus précisément, les conducteurs primaires 5 comprennent trois conducteurs primaires de phase 51, 52 et 53 ainsi qu'un conducteur primaire de neutre 5N qui alimentent le boîtier 4 en électricité et trois conducteurs primaires de phase 51', 52' et 53' ainsi qu'un conducteur primaire de neutre 5N' qui alimentent un autre lampadaire à partir du boîtier 4.

Les conducteurs secondaires 6 sont au nombre de deux et comprennent un conducteur de phase 6i et un conducteur de neutre 6N.

Pour la clarté du dessin, les conducteurs 51, 52, 53, 5N, 51', 52', 53', 5N', 6i et 6N ne sont pas représentés sur les figures 2 et suivantes.

Le boitier de connexion 4 comprend un bornier de connexion 7 composé de quatre bornes 70, 71, 72 et 73 correspondant aux trois phases du réseau et au neutre, et permettant d'assurer la continuité du réseau de distribution électrique.

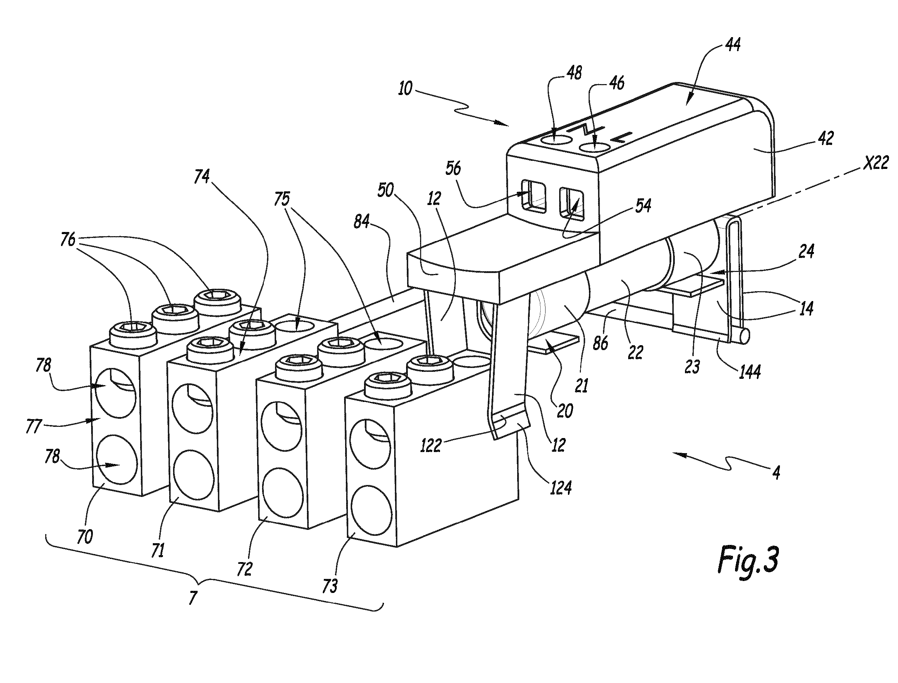

La borne neutre 70 se situe à l'extrême gauche sur la figure 3, tandis que les bornes 71, 72 et 73 correspondant respectivement à une première, une deuxième et une troisième phase sont alignées dans cet ordre de gauche à droite. Une tige de connexion 8 est connectée à la borne de neutre. Les quatre bornes 70, 71, 72, 73 du bornier 7 de connexion et la tige de connexion du neutre 8 sont recouvertes par une coque 9 en matériau plastique isolant qui est visible à la figure 2. La coque 9 et les éléments qu'elle renferme constituent une embase du boîtier 4.

Le boîtier de connexion 4 comprend également un sélecteur 10. Ce sélecteur 10 assure la connexion électrique entre certains des conducteurs primaires 5 du réseau de distribution électrique, raccordés sur les bornes 70, 71, 72, 73 du bornier 7, et les conducteurs secondaires 6 d'alimentation du luminaire 1. Le sélecteur 10 inclut des pattes de contact élastiquement déformables 12 et 14, prévues respectivement à l'avant et à l'arrière du sélecteur 10.

Le sélecteur 10 est prévu pour être monté sur l'embase du boîtier 4, dans l'une des trois positions possibles qui permettent de sélectionner, parmi les trois phases du réseau de distribution électrique primaire, celle qui sera utilisée pour l'alimentation de la lanterne, comme cela ressort des explications qui suivent.

Les pattes de contact 12 sont au nombre de deux et sont réalisées avec un matériau électriquement conducteur et élastiquement déformable, notamment en métal. Dans le mode de réalisation de l'invention représenté sur les figures, les deux pattes de contact 12 sont formées par une unique lame de métal pliée 16. Les parties 12 convergent l'une vers l'autre à partir d'une partie centrale 162 de la lame 16. Par ailleurs, les deux pattes de contact 12 comportent chacune un pli 122 vers l'extérieur, de sorte que leurs extrémités inférieures 124 s'éloignent légèrement l'une de l'autre en s'éloignant de la partie 162. De cette manière, les pattes élastiques 12 forment une pince et la partie resserrée des pattes 12 définie entre les plis 122 permet de maintenir élastiquement en position le sélecteur 10 sur l'une des bornes 71, 72, 73 du bornier 7, tandis que les extrémités ouvertes 124 des pattes 12 permettent d'emboîter facilement le sélecteur 10 sur l'une des bornes 71, 72, 73.

Les pattes élastiques 14 ont une forme comparable à celle des pattes 12. Elles sont formées par une unique lame de métal pliée 18 et comportent des extrémités inférieures 144 recourbées vers l'extérieur de manière à faciliter leur montage sur un cadre, une tige de connexion 8 ou un contact électrique. En pratique, les pattes 14 sont prévues pour être emboîtées sur la tige 8.

La pièce métallique 16 définit, sur sa partie arrière un logement 20, réalisé par cintrage de la bande de tôle dans laquelle est formée la pièce 16. Ce logement 20 est de dimensions adaptées pour recevoir une première extrémité, avant, 21 d'un fusible 22. Le logement 20 est délimité par une patte 164 qui s'étend à partir de la partie 162 de la pièce 16.

Le fusible 22 est de dimensions standard, tel que disponible dans le commerce. Il est engagé, par sa deuxième extrémité 23 dans un logement 24 également obtenu par cintrage d'une bande de tôle qui est, elle, constitutive d'une languette 26. A l'opposé du logement 24, la languette 26 est repliée sur elle-même et constitue une première borne secondaire 28 permettant de connecter le conducteur secondaire de phase.

Une seconde languette 30, équipée d'une deuxième borne secondaire 32 permettant de connecter le conducteur secondaire de neutre, comprend, sur sa partie arrière, une baguette de connexion électrique 34 et une partie métallique 18 formant les pattes arrière 14. La baguette de connexion 34 assure, en outre, le maintien en position de la partie métallique arrière 18 par rapport à la languette 30. Elle doit donc avoir une résistance mécanique suffisante pour ne pas se rompre en cas d'emboîtage et de déboîtage successif des pattes arrière 14 sur un élément de contact électrique, tel que la tige de connexion 8.

L'extrémité 23, du fusible 22 fixée dans le logement de fusible 24, ainsi que la première languette 26 ne sont en contact ni avec la partie métallique 18, ni avec la seconde languette 30, ni avec la baguette de connexion 34. Des parois isolantes séparent les différentes pièces.

La pièce métallique 16, le fusible 22, la première languette 26 et la première borne secondaire 28 sont reliés électriquement et constituent un premier circuit de passage du courant. Par ailleurs, la pièce métallique arrière 18, la baguette de connexion 34, la seconde languette 30 et la deuxième borne secondaire 32 sont reliés électriquement entre eux et forment un second circuit de passage du courant. Des moyens sont prévus afin d'éviter que le premier et le second circuit n'entrent en contact, notamment des moyens d'isolation électrique tels qu'une couche de matériau synthétique, comme expliqué ci-après.

Les bornes secondaires 28 et 32 ont une forme globalement cubique et sont formées par le repli des deux extrémités latérales d'une tôle constituant les languettes 26 et 30, les deux extrémités se chevauchant sur une face supérieure du cube. Deux vis 36 et 38 sont montées chacune dans un taraudage débouchant, percé respectivement sur la face supérieure de la première 28 et de la deuxième 32 borne. Ces vis 36 et 38 sont adaptées pour le serrage d'un conducteur électrique contre la face inférieure 40 de chaque borne 28 et 32. Les vis 36 et 38 assurent à la fois la fixation mécanique d'un conducteur électrique et sa connexion électrique avec la languette 26 ou 30.

Le sélecteur 10 comprend également un capot 42 réalisé en matériau synthétique isolant. Ce capot 42 permet de maintenir en position les différentes pièces conductrices du sélecteur 10 et assure une isolation électrique entre phase et neutre et avec l'extérieur.

Le capot 42 comprend sur sa face supérieure 44 deux orifices 46 et 48 d'accès aux vis 36 et 38. Une partie avant 50 du capot 42 forme un épaulement rentrant et dégage ainsi une face fonctionnelle 52 verticale et dirigée vers l'avant. Cette face fonctionnelle 52 est percée d'un premier orifice 54 et d'un deuxième orifice 56 situés respectivement en vis-à-vis avec la première 28 et la deuxième 32 borne secondaire. Ces orifices 54 et 56 permettent le passage des conducteurs électriques 6i et 6N en vue de leur raccordement au sélecteur 10, via les bornes 28 et 32.

Les bornes 70, 71, 72, 73 du bornier 7 ont globalement une forme de pavé droit et sont toutes identiques. Elles peuvent être conformes à l'enseignement technique de FR-A-2 621 744. Ceci n'est toutefois pas obligatoire. Leur face supérieure 74 est percée de trois orifices 75 alignés selon une direction longitudinale et régulièrement espacés. Des vis 76 sont montées dans les deux orifices 75 situés les plus à l'avant de chaque borne 70, 71, 72, 73 du bornier 7. De plus, l'orifice 75 situé à l'arrière de la borne 70 la plus à gauche, c'est-à-dire la borne de neutre, est lui aussi équipé d'une vis 76.

Par ailleurs, les bornes 70, 71, 72, 73 comportent chacune sur leur face avant 77 deux orifices 78 permettant chacun la connexion d'un conducteur primaire. Ces orifices 78 sont de dimensions identiques et sont alignés selon une direction haut-bas du boîtier 4.

De plus, chaque borne 70, 71, 72, 73 comprend un orifice 79 situé sur sa face arrière. La tige de connexion 8 est montée dans l'orifice 79 de la borne 70 de neutre et immobilisée dans cet orifice, par serrage de la vis de fixation 76 correspondante. La tige 8 est réalisée à partir d'un fil métallique à section ronde et comporte un coude 82 à 90°. Le coude 82 sépare deux branches 84 et 86 de la tige 8, la branche 84 étant celle qui est immobilisée dans l'orifice 79 de la borne 70. La branche 86 est adaptée pour être enserrée par les pattes arrière 14 du sélecteur 10.

Les bornes 70, 71, 72, 73 sont réalisées dans un matériau électriquement conducteur, notamment en laiton, en aluminium ou en acier.

La coque en matériau plastique 9 du boîtier de connexion 4 comprend sur sa face avant 91 des orifices 92 permettant le passage des conducteurs primaires. Ces orifices sont au nombre de huit et sont répartis sur deux rangées. Ils sont de dimensions similaires, régulièrement espacés et alignés avec les orifices 78 situés sur les faces avant des bornes 70, 71, 72, 73.

Par ailleurs, la coque 9 comprend, sur sa surface supérieure 93, des orifices 94 permettant l'accès aux vis 76. Ainsi, la face supérieure 93 comporte neuf orifices 94, répartis sur trois rangées. Les deux premières rangées comprennent chacune quatre orifices et sont situées sur l'avant de la face supérieure 93. Ces orifices 94 correspondent aux orifices 75 percés sur la face supérieure 74 des bornes 70, 71, 72, 73. La troisième rangée ne comporte qu'un seul orifice 94 situé à gauche, et correspondant à l'orifice 75 à l'arrière de la borne 70 la plus à gauche.

De plus, la face supérieure 93 de la coque en plastique 9 comprend trois paires de deux fentes 96 adaptées au passage des pattes avant 12 du sélecteur 10.

La coque 9 comprend également, sur sa face supérieure 93, trois cavités 97, 98, 99, numérotés de gauche à droite, permettant de recevoir le fusible 22 fixé au sélecteur 10 ainsi que les pattes 14 du sélecteur 10. Ces trois cavités 97, 98, 99 sont situés chacune dans l'alignement d'une borne 71, 72 ou 73 correspondante.

Ainsi, le sélecteur 10 est prévu pour être monté, suivant le choix de l'utilisateur, sur une première, deuxième ou troisième phase, en étant engagé dans l'une des cavités 97, 98 et 99. Ainsi, les cavités 97, 98 et 99 forment des emplacements destinés à recevoir sélectivement le sélecteur 10.

Selon l'emplacement 97, 98 ou 99 dans lequel est positionné le sélecteur 10, les pattes 12 du sélecteur pénètrent dans les fentes 96 de l'une des paires de fentes et viennent enserrer l'une des bornes 71, 72 et 73. En revanche, quel que soit l'emplacement 97, 98 ou 99 utilisé, les pattes 14 viennent se serrer sur la branche 86, plus ou moins près du coude 82.

En fonctionnement, le boîtier de connexion 4 assure la continuité du réseau de distribution électrique primaire triphasé et la liaison électrique entre, d'une part, le neutre et une phase du réseau de distribution électrique primaire triphasé et, d'autre part, les conducteurs secondaires 6 d'alimentation de la lanterne 2. Les conducteurs primaires 5 sont connectés au boîtier de connexion 4 à travers les orifices 92. En pratique, chacun des conducteurs primaires 5 est passé dans un orifice 92 et les vis 76 permettent de serrer ces conducteurs dans les bornes 70, 71, 72 et 73 afin d'assurer une liaison électrique pérenne même si l'opérateur doit ultérieurement intervenir sur la lanterne 2 ou changer le fusible 22. Plus particulièrement, la première rangée de vis 76 située à l'avant des bornes 70, 71, 72, 73 permet de serrer les conducteurs 5N, 51, 52 et 53 insérés dans les quatre orifices 78 supérieurs de la face avant 77 des bornes 70, 71, 72, 73. La seconde rangée de vis 76 située sur la partie centrale des bornes 70, 71, 72, 73 permet de serrer les conducteurs 5N', 51', 52' et 53' dans les quatre orifices 78 inférieurs de la face avant 77 des bornes 70, 71, 72, 73.

Les conducteurs secondaires 6 sont connectés sur le sélecteur 10. Chaque conducteur secondaire 6 est passé dans l'un des orifices 54 ou 56 et est fixé par une vis 36 ou 38 respectivement dans les bornes 28 et 32. Plus précisément, le conducteur 6i est engagé dans la borne 28 à travers l'orifice 54, alors que le conducteur 6N est engagé dans la borne 32 à travers l'orifice 56. La connexion des conducteurs 6i et 6N sur le sélecteur 10 est également pérenne et n'est pas remis en question, même en cas d'intervention sur la lanterne ou le fusible.

Les figures 1 et 3 représentent le boîtier de connexion 4 de l'invention lorsque le sélecteur 10 est connecté à la troisième phase du réseau. Ainsi, les pattes avant 12 du sélecteur 10 assurent le contact électrique avec la borne 73, la plus à droite. Le caractère élastique des pattes 12 assure une connexion électrique franche entre les pièces 16 et 73. Le courant électrique est transmis depuis la borne 7 aux pattes 12 puis passe à travers le fusible 22. Il est ensuite transmis au conducteur électrique secondaire 6i connecté à la borne 28 via la languette primaire 26. Ainsi, le premier circuit de passage du courant décrit précédemment correspond à la phase 3 et le fusible 22 se trouve sur cette phase. Le conducteur électrique secondaire 6i assure la liaison électrique de la phase 3 à la lanterne 2 et peut être dénommé « 63 » dans ce cas.

Les conducteurs primaires 5N et 5N' correspondants au neutre du réseau de distribution sont connectés à la borne 70, comme décrit précédemment. Le neutre est transmis à la tige de connexion 8 puis passe par les pattes arrière 14 du sélecteur 10 avant d'être transmis, via la baguette de connexion 34 et la languette secondaire 30, au conducteur secondaire 6N de neutre fixé à la borne 32. De cette manière, le second circuit de passage de courant décrit précédemment correspond systématiquement au neutre.

En fonctionnement, le sélecteur 10 est fixé sur l'embase du boîtier de connexion 4 et ses deux pattes avant 12 sont passées dans deux orifices 96 correspondants. Le fusible 22, ainsi que les pattes arrière 14, sont reçus dans l'orifice 99. Les pattes avant 12 et arrière 14 assurent les contacts électriques entre le sélecteur 10 et respectivement la borne de connexion 73 et la branche 86 de la tige de connexion au neutre 8.

Le sélecteur 10 peut également être positionné de la même manière sur la seconde borne 71 de connexion en partant de la gauche et sur la troisième borne 72 de connexion en partant de la gauche. Dans ce cas, le conducteur secondaire 6i achemine la phase 1 ou la phase 2 à la lanterne et peut être dénommé « 61 » ou « 62 » et le conducteur secondaire de neutre reste connecté à la branche 86, plus ou moins près du coude 82.

Lors de l'opération unique de montage du sélecteur 10 sur l'embase du boîtier 4, c'est-à-dire lors de la connexion des pattes 12 et 14 respectivement à l'une des bornes 71 à 73 et à la branche 86, les conducteurs 6i et 6N préalablement fixés dans les bornes 28 et 32 sont simultanément et automatiquement raccordés à l'une des phases et au neutre du réseau de distribution primaire, sans qu'il soit nécessaire d'utiliser un tournevis ou un autre outil. De même, lors de l'opération unique de séparation du sélecteur et de l'embase, qui ne nécessite pas d'outil, les conducteurs secondaires 6i et 6N sont simultanément et automatiquement isolés de la phase du réseau de distribution électrique primaire et du neutre.

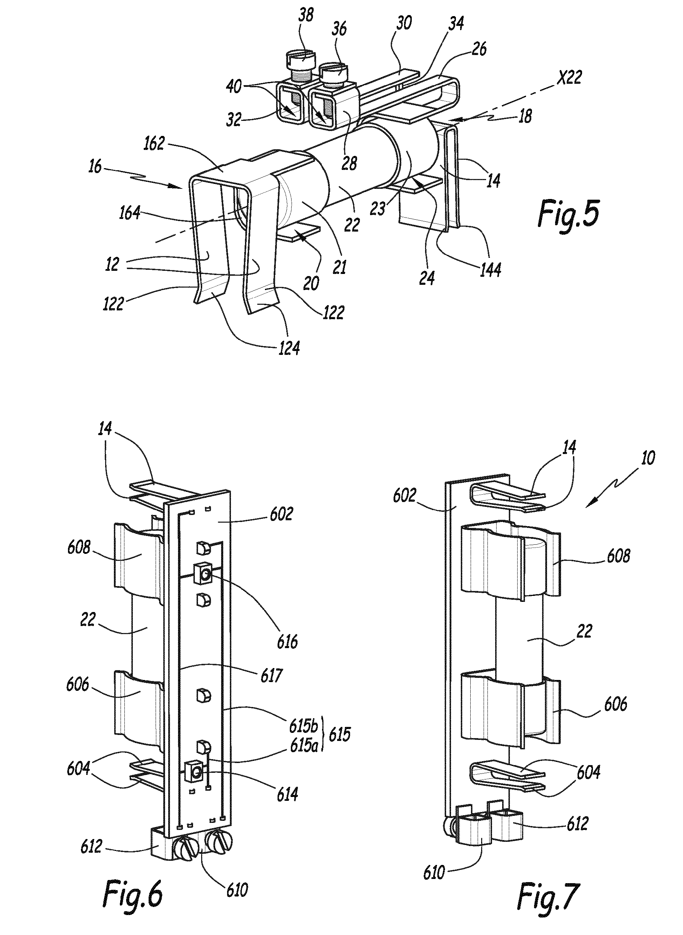

Dans les modes de réalisation représentés sur les figures 6 à 8, les éléments analogues à celui du premier mode de réalisation portent les mêmes références. Dans ce qui suit, on ne décrit que ce qui distingue ces modes de réalisation du premier.

Dans le mode de réalisation des figures 6 et 7, le sélecteur 10 comprend un circuit imprimé 602 sur lequel sont montés différents composants électriques du sélecteur 10. Ainsi, le sélecteur 10 comprend des pattes de contact 14 analogues aux pattes de contact du premier mode de réalisation de l'invention. Les pattes de contact 12 sont remplacées par des pattes de contact 604 comparables, situées à l'avant. Les pattes de contact arrière 14 et avant 604 sont connectées sur la face inférieure du circuit imprimé 602 visible à la figure 7. Le fusible 22 est maintenu en position par deux crochets porte fusible 606 et 608 immobilisant respectivement les extrémités avant 21 et arrière 23 du fusible 22.

Un premier connecteur 610 et un second 612 connecteur, de forme similaire aux bornes du premier mode de réalisation, sont également fixés à l'extrémité avant du circuit imprimé 602. Le premier connecteur 610 se trouve à droite tandis que le second connecteur 612 est situé à gauche selon la représentation de la figure 6.

Le circuit imprimé 602 connecte électriquement, d'une part, les pattes de contact avant 604 au fusible 22, le fusible 22 au premier connecteur 610, par une piste de phase 615, et d'autre part, les pattes arrière 14 au second connecteur 612, par une piste de neutre. La piste de phase 615 comporte deux branches 615a et 615b situées de part et d'autre du fusible 22.

Deux témoins lumineux sont également connectées sur la face supérieure du circuit imprimé 602. On nomme 614 le premier témoin et 616 le second. Ces témoins peuvent être réalisées au moyen de DEL ou selon une autre technologie, et permettent de visualiser la présence de tension de part et d'autre du fusible 22.

Le premier témoin 614 est monté en amont du fusible 22, entre la piste de neutre 617 et la branche 615a de la piste de phase 615. Le second témoin 616 est monté en aval du fusible 22, entre la piste de neutre et la deuxième branche 615b de la piste de phase.

Ainsi, le premier témoin 614, est éclairé lorsque le sélecteur 10 est alimenté en électricité. Le second témoin est éclairé lorsque les bornes de sortie 610 et 612 sont alimentées, ce qui donne une indication sur l'état du fusible.

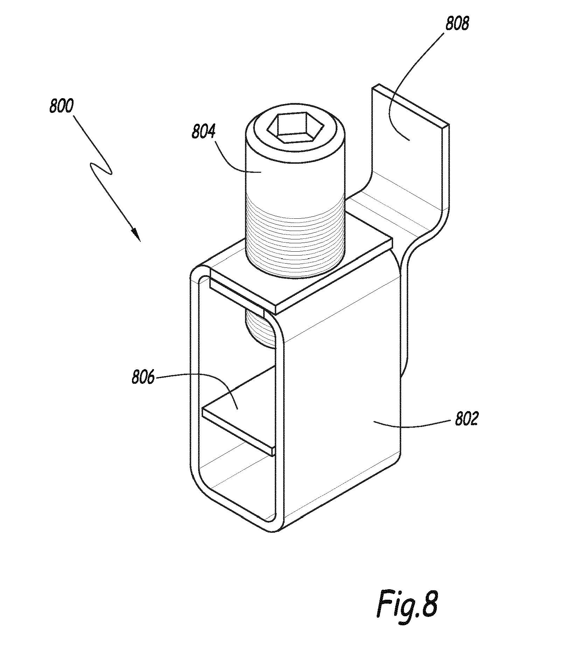

Dans un autre mode de réalisation de l'invention, les bornes 70, 71, 72, 73 sont remplacées par des bornes analogues à la borne 800 de la figure 8. Celle-ci comporte une cage 802, formée d'une tôle repliée de façon à former un volume fermé parallélépipédique. Les deux extrémités de la tôle se chevauchent et comportent un alésage fileté dans lequel passe une vis 804. La borne 800 comprend également un support 806, réalisé par une tôle pliée dont une partie est parallèle au plan horizontal et logé dans la cage 802. L'extrémité arrière du support est repliée verticalement et sert à fixer la borne 800 au boîtier de connexion 4 et à assurer les connexions électriques. En fonctionnement, cette borne 800 permet de connecter deux conducteurs primaires 5. Un premier conducteur est inséré sous le support 806, tandis qu'un second conducteur est inséré entre le support 806 et l'extrémité inférieure de la vis 804. Le serrage de la vis 804 permet de serrer les deux conducteurs 5 de part et d'autre support 806. Lors de cette opération, le support 806 est fixe par rapport au boîtier de connexion 4. En revanche, la cage 802 est amenée à effectuer un mouvement selon un axe vertical, vers le haut.

Selon une variante non représentée de l'invention, un deuxième fusible peut être prévu sur le sélecteur 10.

Selon encore une autre variante non représentée de l'invention, les pattes de contact 12 et 14, les bornes 70 à 73 et la tige 8 peuvent être décalées les unes par rapport aux autres, au point que le raccordement du conducteur 6i à l'une des phases du réseau est décalé dans le temps par rapport au raccordement du conducteur 6N au neutre, même si ces deux raccordements résultent de la même opération de montage du sélecteur 10 sur l'embase. Il en va de même en matière de retrait du sélecteur et de déconnexion.

Dans le cadre de l'invention, les différents modes de réalisation décrits, ainsi que leurs variantes, peuvent être combinés entre eux.

## Revendications

1. Boîtier de connexion (4) de deux conducteurs électriques secondaires (6i, 6N) d'alimentation d'un luminaire (1) d'éclairage public à deux des conducteurs primaires (51, 52, 53, 5N) d'un réseau de distribution électrique primaire triphasé (5), ce boîtier incluant un bornier de connexion (7) sur lequel sont connectés les conducteurs électriques primaires, **caractérisé en ce qu'**il comprend un unique sélecteur (10) permettant de connecter ou de déconnecter, en une opération, un conducteur électrique secondaire de phase (6i) à un conducteur électrique primaire (51, 52, 53) choisi parmi les trois conducteurs de phase du réseau de distribution électrique primaire triphasé et le conducteur électrique secondaire de neutre (6N) au conducteur électrique primaire de neutre (5N) de ce réseau.

2. Boîtier (4), selon la revendication 1, **caractérisé en ce que** la déconnexion du sélecteur (10) réalise la fonction de sectionnement électrique du circuit d'alimentation électrique (6i, 6N) du luminaire (2).

3. Boîtier (4), selon l'une des revendications précédentes, **caractérisé en ce que** le sélecteur (10) comporte un dispositif (22) de protection contre les surintensités.

4. Boîtier (4) selon l'une des revendications précédentes, **caractérisé en ce que** le sélecteur (10) assure la connexion entre deux conducteurs secondaires (6i, 6N) d'alimentation du luminaire (2) et deux bornes sélectionnées parmi les quatre bornes (70, 71, 72, 73 ; 800) du bornier (7) de connexion.

5. Boîtier (4) selon la revendication 4, **caractérisé en ce que** les quatre bornes (70, 71, 72, 73 ; 800) du bornier de connexion (7) correspondent aux trois phases et au neutre du réseau électrique primaire triphasé et les deux conducteurs secondaires (6i, 6N) correspondent à l'une des phases de ce réseau électrique primaire triphasé et au neutre.

6. Boîtier (4) selon les revendications 3 et 5, **caractérisé en ce que** le dispositif de protection contre les surintensités est un fusible (22), placé électriquement en série entre la borne de phase sélectionnée (70, 71, 72, 73, 800) et le conducteur secondaire de phase (6i).

7. Boîtier (4) selon l'une des revendications précédentes, **caractérisé en ce que** le sélecteur (10) comprend des pattes de contact (12) élastiquement déformables permettant de le connecter électriquement à l'une des bornes de phase (70, 71, 72,) du bornier (7) de connexion et à la borne de neutre (70, 800).

8. Boîtier (4) selon l'une des revendications précédentes, **caractérisé en ce que** le sélecteur (10) comprend un circuit imprimé (602) incluant des moyens (14, 604, 610, 612) de connexion électrique avec, d'une part, deux des conducteurs primaires (51, 52, 53, 5N) du réseau de distribution électrique primaire triphasé et, d'autre part, les conducteurs secondaires (6i, 6N) d'alimentation du luminaire (2).

9. Boîtier (4) selon les revendications 6 et 8, **caractérisé en ce que** le circuit imprimé (602) inclut un ou plusieurs témoins lumineux (614, 616) permettant de visualiser la présence de tension de part et d'autre du fusible (22).

10. Boîtier (4) selon l'une des revendications précédentes, **caractérisé en ce qu'**il comprend, sur sa surface supérieure (93), trois emplacements (97, 98, 99) destinés à recevoir le sélecteur (10) et correspondant chacun à la sélection de l'une des trois phases (51, 52, 53).

## Patentansprüche

1. Gehäuse (4) zum Verbinden von zwei elektrischen Sekundärleiter (6i, 6N) zur Versorgung einer Leuchte (1) für eine öffentliche Beleuchtung mit zwei Primärleitern (51, 52, 53, 5N) eines dreiphasigen elektrischen Primärverteilernetzes, wobei dieses Gehäuse eine Anschlussklemmleiste (7) einschließt, an der die elektrischen Primärleiter verbunden sind, **dadurch gekennzeichnet, dass** es einen einzigen Umschalter (10) umfasst, der mit einer Operation gestattet, einen elektrischen Sekundärphasenleiters (6i) mit einem elektrischen Primärleiter (51, 52, 53), der unter den drei Phasenleitern des dreiphasigen elektrischen Primärverteilernetzes ausgewählt ist, und den elektrischen Neutralleiter (6N) mit dem elektrischen Primärneutralleiter (5N) dieses Netzes zu verbinden oder zu trennen.

2. Gehäuse (4) nach Anspruch 1, **dadurch gekennzeichnet, dass** die Unterbrechung des Umschalters (10) die elektrische Trennfunktion des elektrischen Versorgungskreises (6i, 6N) der Leuchte (2) realisiert.

3. Gehäuse (4) nach einem der vorhergehenden Ansprüche, **dadurch gekennzeichnet, dass** der Umschalter (10) eine Vorrichtung (22) zum Schutz gegen Überspannungen aufweist.

4. Gehäuse (4) nach einem der vorhergehenden Ansprüche, **dadurch gekennzeichnet, dass** der Umschalter (10) die Verbindung zwischen zwei Sekundärleitern (6i, 6N) zur Versorgung der Leuchte (2) und zwei Anschlüssen, die unter den vier Anschlüssen (70, 71, 72, 73; 800) der Verbindungsklemmleiste (7) ausgewählt sind, sicherstellt.

5. Gehäuse (4) nach Anspruch 4, **dadurch gekennzeichnet, dass** die vier Anschlüsse (70, 71, 72, 73; 800) der Anschlussklemmleiste (7) den drei Phasen und dem Nullleiter des dreiphasigen elektrischen Primärnetzes entsprechen und die zwei Sekundärleiter (6i, 6N) einer der Phasen dieses dreiphasigen elektrischen Primärnetzes und dem Neutralleiter entsprechen.

6. Gehäuse (4) nach den Ansprüchen 3 und 5, **dadurch gekennzeichnet, dass** die Vorrichtung zum Schutz gegen Überspannungen eine Sicherung (22) ist, die elektrisch in Reihe zwischen dem Anschluss der ausgewählten Phase (70, 71, 72, 73, 800) und dem Sekundärphasenleiter (6) liegt.

7. Gehäuse (4) nach einem der vorhergehenden Ansprüche, **dadurch gekennzeichnet, dass** der Umschalter (10) elastisch deformierbare Kontaktfahnen (12) umfasst, die ermöglichen, ihn elektrisch mit einem der Phasenanschlüsse (70, 71, 72) der Anschlussklemmleiste (7) und mit dem Neutralanschluss (70, 800) zu verbinden.

8. Gehäuse (4) nach einem der vorhergehenden Ansprüche, **dadurch gekennzeichnet, dass** der Umschalter (10) einen gedruckten Schaltkreis (602) umfasst, der Mittel (14, 604, 610, 612) zur elektrischen Verbindung mit zwei Primärleitern (51, 52, 53, 5N) des dreiphasigen elektrischen Primärverteilernetzes einerseits und den Sekundärleitern (6i, 6N) zur Versorgung der Beleuchtungsvorrichtung (2) andererseits einschließt.

9. Gehäuse (4) nach den Ansprüchen 6 und 8, **dadurch gekennzeichnet, dass** der gedruckte Schaltkreis (602) eine oder mehrere Kontrolllampen (614, 616) einschließt, die die Visualisierung des Vorhandenseins der Spannung beidseitig der Sicherung (22) gestatten.

10. Gehäuse (4) nach einem der vorhergehenden Ansprüche, **dadurch gekennzeichnet, dass** es an seiner oberen Fläche (93) drei Stellen (97, 97, 99) umfasst, die vorgesehen sind, den Umschalter (10) aufzunehmen und die jeweils der Wahl einer der drei Phasen (51, 52, 53) entsprechen.

## Claims

1. Connection box (4) for two secondary electrical conductors (6i, 6N) for a street light (1) with two primary conductors (51, 52, 53, 5N) of a three-phase primary electrical distribution network (5), wherein this box includes a terminal block (7), on which the primary electrical conductors are connected, **characterised in that** it comprises a single selector (10) enabling, in one operation, a secondary phase conductor (6i) to be connected or disconnected to/from a primary electrical conductor (51, 52, 53) selected from the three phase conductors of the three-phase primary electrical distribution network and the secondary neutral conductor (6N) to be connected or disconnected to/from the primary neutral conductor (5N) of this network.

2. Box (4) according to claim 1, **characterised in that** the disconnection of the selector (10) performs the function of electrical sectioning of the electric supply circuit (6i, 6N) of the light (2).

3. Box (4) according to one of the preceding claims, **characterised in that** the selector (10) comprises a device (22) for protecting against overcurrents.

4. Box (4) according to one of the preceding claims, **characterised in that** the selector (10) ensures the connection between two secondary conductors (6i, 6N) for supplying the light (2) and two selected terminals of the four terminals (70, 71, 72, 73; 800) of the terminal block (7).

5. Box (4) according to claim 4, **characterised in that** the four terminals(70, 71, 72, 73; 800) of the terminal block (7) correspond to the three phases and to the neutral of the three-phase primary electrical network and the two secondary conductors (6i, 6N) correspond to one of the phases of this three-phase primary electrical network and the neutral.

6. Box (4) according to claims 3 and 5, **characterised in that** the device for protecting against overcuments is a fuse (22) placed electrically in series between the selected phase terminal (70, 71, 72, 73, 800) and the secondary phase conductor (6i).

7. Box (4) according to one of the preceding claims, **characterised in that** the selector (10) comprises elastically deformable contact lugs (12) enabling it to be electrically connected to one of the phase terminals (70, 71, 72) of the terminal block (7) and to the neutral terminal (70, 800).

8. Box (4) according to one of the preceding claims, **characterised in that** the selector (10) comprises a printed circuit (602) including means (14, 604, 610, 612) for electrically connecting with two of the primary conductors (51, 52, 53, 5N) of the three-phase primary electrical distribution network, on the one hand, and the secondary conductors (6i, 6N) for supplying the light (2), on the other hand.

9. Box (4) according to claims 6 and 8, **characterised in that** the printed circuit (602) includes one or more pilot lights (614, 616) enabling the presence of voltage on either side of the fuse (22) to be displayed.

10. Box (4) according to one of the preceding claims, **characterised in that** on its upper surface (93) it has three slots (97, 98, 99) intended to receive the selector (10), each corresponding to the selection of one of the three phases (51, 51, 53).
